# EUROPÄISCHE PATENTANMELDUNG

(11) **EP 0 982 888 A1**
(43) Veröffentlichungstag der Anmeldung: **01.03.2000**
(21) Anmeldenummer: 98116319.9
(22) Anmeldetag: 28.08.1998
(51) Int. Cl.: H04J 3/06

(54) **Telekommunikationssystem sowie Verfahren zum Synchronisieren desselben und zum Senden von Daten**

(71) Anmelder: SIEMENS AKTIENGESELLSCHAFT, 80333 München (DE)
(72) Erfinder: Hennen, Stefan Dipl.-Ing., 82131 Gauting (DE); Roder, Annette Dipl.-Ing., 81377 München (DE); Skorka, Klemens Dr., 80807 München (DE); Steinigke, Klaus Dr., 81371 München (DE)

(57) **Zusammenfassung**

Telekommunikationssysteme lassen sich über die Übertragungsstrecke synchronisieren. Dabei empfangen die Telekommunikationssysteme den Takt sowie eine Zusatzinformation, die die Qualität des Taktsignals beschreibt, aus dem empfangenen Datenstrom. Bei Telekommunikationssystemen, die mit mehreren verschieden standardisierten Übertragungsnetzen verbunden sind, sind im Hauptprozessor verschiedene Algorithmen zur Auswertung der unterschiedlich formatierten Taktqualitätsdaten notwendig. Die Erfindung soll die Kommunikation von Taktqualitäten vereinfachen. Die verschiedenen Schnittstellenkarten 4-10 besitzen Wandler 22-28, die die Taktqualitätsinformation zwischen einem übertragungsnetzspezifischen Format und einem unabhängigen Format umwandeln. Im Hauptprozessor 2 befindet sich lediglich eine Untereinheit 30 zur Verarbeitung aller Taktqualitäten. Das Verfahren zum Synchronisieren eines Telekommunikationssystems umfaßt einen Schritt des Umwandelns der übertragungsnetzspezifischen Daten in Nachrichten eines unabhängigen Formates. Das Verfahren zum Senden von Daten umfaßt einen Schritt des Umwandelns der unabhängig formatierten Nachrichten in übertragungsnetzspezifische Daten.

## Beschreibung

Die Erfindung bezieht sich auf Telekommunikationssystem gemäß dem Oberbegriff des Patentanspruchs 1, auf ein Verfahren zum Synchronisieren eines Telekommunikationssystems sowie auf ein Verfahren zum Senden von Daten von einem Telekommunikationssystem in wenigstens ein Übertragungsnetz. Insbesondere bezieht sich die Erfindung auf Telekommunikationssysteme, die zur Übertragung von Daten über eine Vielzahl verschiedener Ubertragungsnetze dienen.

Der Begriff Telekommunikation ist eine Sammelbezeichnung für alle nachrichtentechnischen Übertragungsverfahren durch vielfältige Dienste bei der Kommunikation über größere Entfernungen zwischen Mensch-Mensch, Mensch-Maschine und Maschine-Maschine. Durch das Zusammenwachsen von Informations- und Kommunikationstechnik erhält die Telekommunikation eine ganz besondere Bedeutung. Die Telekommunikation ist durch die Übertragungstechnik mit Kabelübertragungstechnik, Sprech- und Datenfunk, Satelliten-technik, Lichtwellenleitertechnik, Modems, digitale Vermittlungsanlagen und Vermittlungstechnik und lokale Netze gekennzeichnet.

Um einen sinnvollen Nachrichtenaustausch zwischen zwei (oder mehreren) Partnern zu ermöglichen, ist neben der reinen Übertragung von Nachrichten ein Regelwerk erforderlich, das die für eine sinnvolle Kommunikation einzuhaltenen Konventionen in Form von Protokollen festlegt. Derartige Regeln werden z.B. in den Dienstspezifikationen der einzelnen Ebenen des OSI-Referenzmodells (Open Systems Interconnection) beschrieben. Das OSI-Referenzmodell wurde im Jahre 1983 von der Internationalen Standardisierungsorganisation (ISO) ausgehend von der Übertragung von Informationen im Bereich der Datenverarbeitung erstellt und hat inzwischen eine sehr weite Verbreitung auch in den Anwendungen der Kommunikations-systeme gefunden. Das OSI-Modell stellt lediglich Prinzipien der Nachrichtenübertragung dar und definiert folglich nur die Logik des Informationsflusses zwischen Teilnehmern. Da der OSI-Standard keine Festlegungen über die physikalische Übertragung von Kommunikation beinhaltet, ist er hersteller-unabhängig, bedarf jedoch zur Realisierung eines Kommunikationssystems ergänzende Protokolle zur detaillierteren Festlegung basierend auf weiteren, z.B. proprietären Standards.

Prinzipiell kann die asynchrone von der synchronen Kommunikation unterschieden werden. Unter asynchroner Kommunikation wird im allgemeinen der zeitlich völlig entkoppelte Austausch von Nachrichten zwischen einer Sende- und einer Empfangsinstanz verstanden. Es ist nicht vorhersehbar, wann eine Sende-, und die zugehörige Empfangsoperation angestoßen wird.

Demgegenüber wird unter synchroner Kommunikation der Austausch von Nachrichten zwischen einer Sende- und einer Empfangs instanz verstanden, falls dieser Austausch in einem festen Zeitraster geschieht. Dabei müssen eine Sende- und die zugehörige Empfangsoperation immer zeitgleich ausgeführt werden.

Telekommunikationsnetzwerke sind durch die Möglichkeit des bi- und multidirektionalen Datenaustausches zwischen den Teilnehmern gekennzeichnet. Dies setzt voraus, daß jeder beteiligte Teilnehmer mit jeder anderen über dasselbe Medium kommunizieren kann. Die einfachste Realisierung hierzu ist, die Kommunikation aller Teilnehmer im Basisband. Aufgrund der Vielzahl paralleler aktiver Teilnehmer kommen hier vornehmlich Verfahren zum Einsatz, die den Teilnehmern die verfügbare Bandbreite im Zeitmultiplex statisch zuordnen. Aufgrund der steigenden Nutzung der Lichtwellenleiter-Technik, der Notwendigkeit einer verbesserten interkontinentalen Datenkommunikation und den gestiegenen Leistungsanforderungen, wird die seit den 60er Jahren vorherrschende Plesiochrone Digitale Hierarchie (PDH) zunehmend durch die Synchrone Digitale Hierarchie (SDH) abgelöst.

Die Plesiochrone Digitale Hierarchie multiplext die in PCM-Form (Pulscodemodulation) vorliegenden Daten verschiedener Endsysteme bitweise in einen Datenstrom. Eine Hierarchiestufe ist dabei durch die Anzahl der von ihr gemultiplexten Basiskanäle bzw. der Rahmen der darunterliegenden Hierarchiestufe gekennzeichnet.

Aufgrund der unterschiedlichen Übertragungsrate eines Basiskanals in Europa und den USA kam es zur Ausbildung inkompatibler PDH-Hierarchien. Der in den USA vorherrschende DS1-Standard sieht drei Hierarchiestufen vor, während im europäischen E1-Standard fünf Stufen vorgesehen sind. Die unterste Stufe (E1) multiplext dabei 30 Basiskanäle. Bedingt durch die plesiochrone Übertragung, bei der Abweichungen von (2 - 5)10⁻²-Hz vom nominellen Takt zulässig sind, entsprechen die nominellen Übertragungsraten nicht exakt dem Vielfachen der jeweils niedrigeren Stufe, sondern sind geringfügig höher angesiedelt. Die damit aufgrund der zulässigen Schwankungen auftretende Lücke innerhalb einer Hierarchiestufe wird durch Stopfbits, die keine Information enthalten, gefüllt (Positives Stopfen) .

Obwohl auch für die höheren PDH-Stufen Lichtwellenleiter als Übertragungsmedium eingesetzt werden, führte bereits in den 80er Jahren der verstärkte Einsatz von Lichtwellenleitern zu Überlegungen hinsichtlich eines neuen, leistungsfähigeren Ansatzes, der die veraltete PDH-Technik ablösen sollte.

Von der Firma Bellcore wurde die Entwicklung in den USA initiiert und 1984 durch das Industrial Carriers Compatibility Forum (ICCF) übernommen. Aus dem hieraus hervorgehenden amerikanischen Standard SONET (Synchronous Optical Network) resultierte der von der International Telecommunications Union (ITU) verabschiedete internationale Standard SDH (Synchronous Digital Hierarchie) .

SONET ist der von der CCITT verabschiedete Standard einer Schnittstellen-Familie für den Einsatz in optischen Netzen, d.h. in Netzen, deren Übertragungsmedium eine Glasfaser ist. Damit ermöglicht SONET erstmals die Verbindung von Terminals verschiedener Hersteller in standardisierter Form sowie die direkte Verbindung von optischen Multiplexern mit digitalen Kreuzschienenverteilern. Dabei werden Datenraten von 51,84 Mbps bis über 2,4 Gbps hinaus erreicht.

Die Synchrone Digitale Hierarchie (SDH) wird gelegentlich auch als die internationale Variante von SONET bezeichnet. Das Basisformat der SDH-Übertragung ist der STM-1-Rahmen (Synchronous Transport Modul). Der STM-1-Rahmen setzt sich aus einem Header, der Sektionszusatzinformation, und einem Nutzdatenteil, dem Container, zusammen. Den STM-Rahmen auch aller höheren Hierarchiestufen gemeinsam ist eine feste Übertragungszeit. Da ab einer Übertragungsrate von 155 Mbps der SDH-Standard kompatibel zum SONET-Standard ist, ermöglicht SDH gegenüber PDH eine vereinfachte interkontinentale Datenkommunikation. Aufgrund des im Vergleich zur Nutzlast geringen Overheads zeichnet sich SDH ferner durch eine sehr gute Effizienz von über 96% aus.

Telekommunikationssysteme, die Verbindung zu standardisierten Übertragungsnetzen wie PDH, SDH oder SONET haben, erfordern in der Regel eine Synchronisation, um die notwendige Taktqualität an der Schnittstelle zum Übertragungsnetzwerk zu erreichen. Dabei werden zwei Betriebsarten der Synchronisation unterschieden. Im Falle einer externen Synchronisation wird dem System von einer externen Synchronisationsquelle ein Takt direkt zugeführt. Demgegenüber wird bei einer Synchronisation über die Übertragungsstrecke der Takt aus dem empfangenen Datenstrom der Schnittstelle gewonnen und dem System als Synchronisationsquelle zugeführt. Dazu enthalten die empfangenen Datenrahmen neben der Nutzinformation unter anderem auch Zusatzinformationen, die die Qualität des Taktsignales einer Gegenstelle beschreiben.

Bei einem Teil der Schnittstellentypen in plesiochroner digitaler Hierarchie wird die Taktqualität im Timing-Marker-Bit übertragen. Tabelle 1 zeigt das Timing-Marker-Bit MA-Byte gemäß PDH (ITU G.832, E3).

Im Falle von SONET und der Synchronen Digitalen Hierarchie SDH wird die Qualität des Taktsignales im sogenannten SSM-Byte (Synchronisation Status Message) kommuniziert. In Tabelle 2 sind die SSM-Definition in SONET (Bellcore GR253) und in Tabelle 3 die SSM-Definition bei Synchroner Digitaler Hierarchie (ITU G.708) dargestellt.

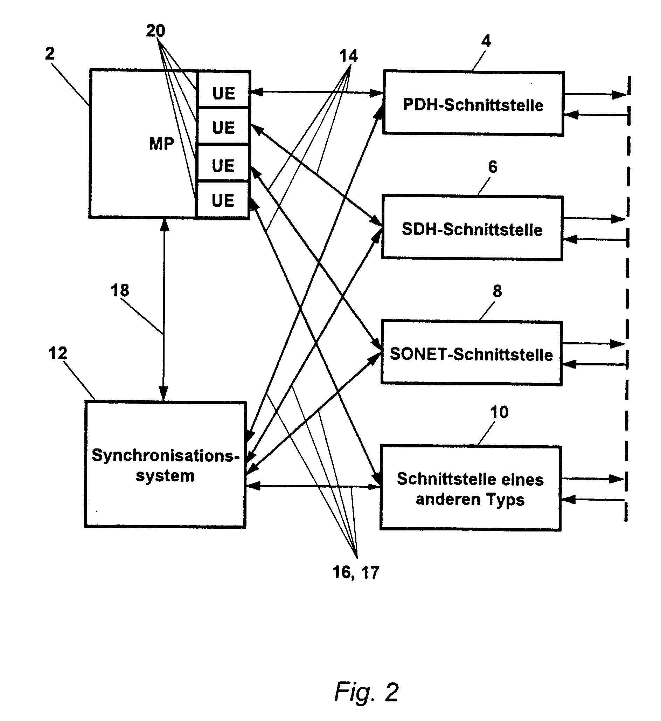

Aufgrund der parallelen Existenz verschieden standardisierter Übertragungsnetze wie PDH, SDH oder SONET besteht ein Bedarf an Telekommunikationssystemen, welche gleichzeitig Verbindungen zu mehreren dieser Übertragungsnetze unterhalten. Fig. 2 zeigt ein solches Telekommunikationssystem, das einen Hauptprozessor MP 2 und Schnittstellenkarten 4-10 umfaßt. Dabei besitzt ein solches Telekommunikationssystem für jeden unterschiedlichen Schnittstellentyp eine eigene Schnittstellenkarte. Das Telekommunikationssystem umfaßt ferner ein Synchronisationssystem 12, das sowohl mit dem Hauptprozessor 2 als auch den Schnittstellenkarten verbunden ist.

Wie in Fig. 2 mit Bezugszeichen 14 gezeigt, kommunizieren die Schnittstellenkarten 4-10 mit dem Hauptprozessor 2 die jeweiligen Taktqualitäten. Darüber hinaus liefern die Schnittstellenkarten, wie unter Bezugszeichen 16 gezeigt, den jeweils aus dem Übertragungsnetz gewonnen Takt an das Synchronisationssystem 12. Das Synchronisationssystem synchronisiert das Telekommunikationssystem unter Steuerung durch Hauptprozessor 2 über Verbindungen 17 mit einem der von den Schnittstellenkarten übermitteltem Takt 16.

Der Hauptprozessor 2 beurteilt auf der Grundlage der über die Verbindungen 14 von den Schnittstellenkarten 4-10 empfangenen Taktqualitäten, mit welchem der aus den standardisierten Übertragungsnetzen zugeführten Taktsignalen des Telekommunikationssystems synchronisiert werden soll. Da, wie oben ausgeführt und aus den Tabellen 1 bis 3 ersichtlich, die von den unterschiedlichen Schnittstellentypen bereitgestellten Taktqualitätsinformationen in verschiedenen Formaten vorliegen und sogar verschiedene Wertebereiche aufweisen, muß die Behandlung der Taktqualitäten unterschiedlicher Schnittstellentypen im Hauptprozessor 2 getrennt erfolgen. Zu diesem Zweck verfügt der Hauptprozessor über Untereinheiten 20, von denen jede zur Bearbeitung der Taktqualitätsinfor-mationen eines Schnittstellentyps (PDH, SDH, SONET) vorgesehen ist. Diese verschiedenen Untereinheiten 20 des Hauptprozessors 2 besitzen jeweils einen unterschiedlichen Aufbau und weisen, bedingt durch die unterschiedlichen Datenformate, eine jeweils verschiedene Funktionalität auf. Folglich werden im Hauptprozessor die Taktqualitäten getrennt behandelt. Eine unterschiedliche Behandlung geht auch aus dem aktuellen Entwurf der ITU-T, G.synce,01/98 (Synchronisation Layer Functions) hervor. Dieser Entwurf unterscheidet die Optionen 1 bis 3, wobei die Optionen 1 und 3 die Synchrone Digitale Hierarchie nach bisherigem ITU-Standard beschreiben, während die Option 2 sich auf das auf Bellcore basierende SONET bezieht.

Telekommunikationssystem der vorgenannten Bauart weisen den Nachteil auf, daß im Hauptprozessor mehrere Algorithmen für die den verschiedenen Übertragungsnetzen inhärenten Wertebereiche und Formate notwendig sind. Aufgrund der verschiedenen existierenden Normen, die auch in verschiedenen Ländern unterschiedlich sein können, ist daher stets eine Anpassung des Hauptprozessors notwendig.

Der Erfindung liegt somit die Aufgabe zugrunde, ein Telekommunikationssystem der obengenannten Art sowie ein Verfahren zum Synchronisieren eines solchen Telekommunika-tionssystems und zum Senden von Daten von einem solchen Telekommunikationssystem anzugeben, bei denen die Kommunikation von Taktqualitäten vereinfacht ist.

Diese Aufgabe wird durch die Gegenstände der Patentansprüche 1, 10 und 20 gelöst.

Vorteilhafte Ausgestaltungen der Erfindung sind Gegenstände der Patentansprüche 2 bis 9, 11 bis 19 und 21 bis 27.

Mit der Erfindung wird insbesondere erreicht, daß die systeminterne Verarbeitung der Taktqualität nach lediglich einem Algorithmus erfolgt. Dabei ist eine Unterscheidung des Schnittstellentyps nicht mehr erforderlich.

Durch die Vermeidung getrennter Behandlungen von Taktqualitäten aus verschiedenen Übertragungsnetzen ergibt sich eine Vereinfachung der systeminternen Kommunikation besonders beim Senden, da der Hauptprozessor 2 eines erfindungsgemäßen Telekommunikationssystems lediglich einen Wert der Taktqualität erzeugt und an alle verbundenen Schnittstellenkarten weiterleitet. Somit entfällt das Erzeugen unterschiedlicher Datenformate im Hauptprozessor. Damit verbunden ist eine Reduktion des Hardware- und Softwareaufwandes im Hauptprozessor.

Weiterhin wird vorteilhafterweise die Anzahl der zu sendenden Meldungen reduziert und die Performance des Systems gesteigert.

Ein weiterer Vorteil ergibt sich aus der vereinfachten Nachrüstbarkeit des Telekommunikationssystems bei der Einführung eines neuen Übertragungsnetzstandards, da der Hauptprozessor keine standardabhängigen Elemente enthält.

Weiter wird mit der Erfindung in vorteilhafter Weise ein Telekommunikationssystem geschaffen, das bei der Umwandlung von Daten in ein Format, das unabhängig von den Formaten der Übertragungsnetze ist, einen Wertebereich des unabhängigen Formats wählt, der alle spezifischen Formate abdeckt. Auf diese Weise wird ein Verlust von Informationen bezüglich der Taktqualität einzelner Übertragungsnetze vermieden.

Bevorzugte Ausführungsbeispiele der Erfindung werden nachstehend erläutert. Es zeigen:
Fig. 1 ein bevorzugtes Ausführungsbeispiel eines erfindungsgemäßen Telekommunikationssystems, und
Fig. 2 ein herkömmliches Telekommunikationssystem

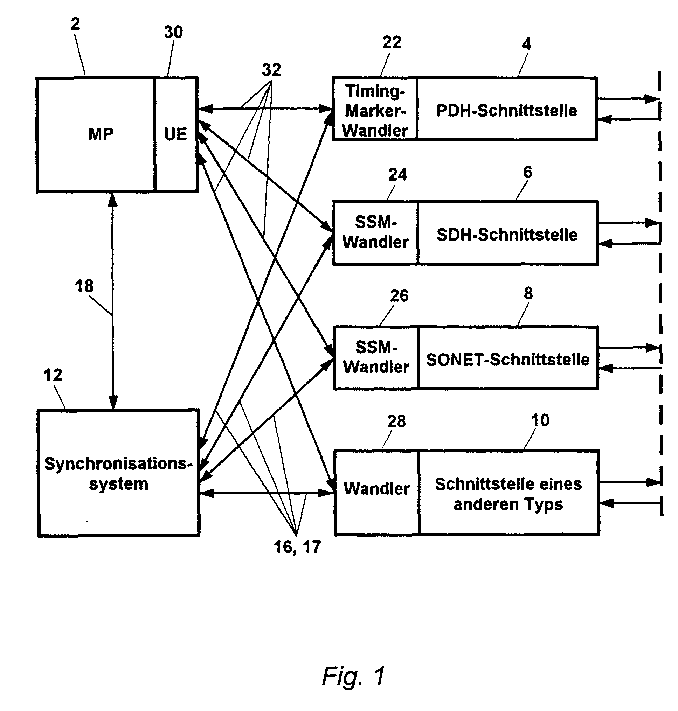

In Fig. 1 ist ein bevorzugtes Ausführungsbeispiel eines Telekommunikationssystems dargestellt, das, wie das oben beschriebene bekannte Telekommunikationssystem, einen Hauptprozessor 2, mehrere Schnittstellenkarten 4-10 und ein Synchronisationssystem 12 umfaßt. Zudem weisen die Schnittstellenkarten 4-10 Wandler 22-28 auf, die die schnittstellenspezifischen Taktqualitäten in ein einheitliches Format umwandeln. Beispielsweise wandelt der Timing-Marker-Wandler 22 die im Timing-Marker-Bit enthaltene Information über die Taktqualität des PDH-Übertragungsnetzes in das einheitliche Format um. Die SSM-Wandler 24, 26 der SDH-Schnittstellenkarte 6 und der SONET-Schnittstellenkarte 8 wandeln die in den SSM-Daten enthaltenen Qualitätsinfor-mationen, wie sie in den Tabellen 2 und 3 dargestellt sind, in das einheitliche Format um. Diese einheitlich formatierten Taktqualitäten werden, wie im Bezugszeichen 32 gezeigt, an den Hauptprozessor 2 übermittelt. Der Hauptprozessor 2 verfügt über eine gemeinsame Untereinheit 30, die die einheitlich formatierten Taktqualitäten sämtlicher Schnittstellenkarten empfängt, unter Verwendung eines einzigen gemeinsamen Algorithmus verarbeitet und an den Hauptprozessor zur Verarbeitung weiterleitet.

Beim Senden von Daten von dem Telekommunikationssystem zu einem oder mehreren Übertragungsnetzen übermittelt die gemeinsame Untereinheit 30 des Hauptprozessors 2 über die Verbindungen 32 die aktuelle Taktqualität im einheitlichen Datenformat an die Wandler 22-28 der Schnittstellenkarten 4-10. Die Wandler wandeln die empfangene Taktqualität in das entsprechende, in Tabellen 1 bis 3 dargestellte Datenformat des jeweiligen Übertragungsnetzes um, so daß die zu sendenden Daten von der jeweiligen Schnittstellenkarte 4-10 an die Gegenstelle gesendet werden kann.

Gemäß einer bevorzugten Ausführung der Erfindung verfügt das einheitliche Format der Taktqualitäten über einen Wertebereich, der wenigstens die Ausdehnung des größten Wertebereiches der verbundenen Ubertragungsnetze aufweist. Vorzugsweise wird die Taktqualität in vier Bits eines Bytes abgelegt.

**Tabelle 1**

| Beschreibung | Timing-Marker-Bit (MA-Byte) |
|---|---|
| Primärer Referenztakt | 0 |
| Unbekannt | 1 |

**Tabelle 2**

| Beschreibung | SSM-Z1-Byte Bits 8-5 | DS1-ESF-Datenverbindungscodewort |
|---|---|---|
| Primärer Referenztakt | 1000 | 00000100 11111111 |
| Normal, unbekannte Qualität | 0000 | 00001000 11111111 |
| Stratum 2 holdover | 1110 | 00001100 11111111 |
| Stratum 3 holdover | 0101 | 00010000 11111111 |
| SONET selftimed | 0011 | 00100010 11111111 |
| Stratum 4 freerun | N/A | 00101000 11111111 |
| Für Synchronisation ungeeignet | 1111 | 00110000 11111111 |

**Tabelle 3**

| Beschreibung | SSM-S1-Byte, Bits 5-8 |
|---|---|
| G.811 | 0010 |
| Synchronisationsnetzwerk existiert, unbekannte Qualität | 0000 |
| G.812 Transit-Knoten | 0100 |
| G.812 Lokaler Knoten | 1000 |
| SDH SETS | 1011 |
| Für Synchronisation nicht geeignet | 1111 |

## Patentansprüche

1. Telekommunikationssystem zur Übertragung von Daten über wenigstens eines einer Vielzahl verschiedener Übertragungsnetze, wobei dem Telekommunikationssystem aus dem wenigstens einen Übertragungsnetz wenigstens ein Takt als Synchronisa-tionsquelle zugeführt wird, bestehend aus:
wenigstens einer Schnittstelleneinheit (4-10) zum Empfangen von Daten von dem wenigstens einen Übertragungsnetz, die die Qualität des über das wenigstens eine Übertragungsnetz zugeführten Taktes beschreiben, und
einer Einrichtung (2, 30) zur Beurteilung der Qualität des wenigstens einen zugeführten Taktes,
**dadurch gekennzeichnet,** daß die wenigstens eine Schnittstelleneinheit (4-10) einen Wandler (22-28) umfaßt, der die die Qualität beschreibenden Daten in Nachrichten umwandelt, deren Format von denen der übertragenen Daten unabhängig ist, und diese Nachrichten an die Einrichtung (2, 30) zur Beurteilung sendet.

2. Telekommunikationssystem nach Anspruch 1,
**dadurch gekennzeichnet,**
daß der Wandler (22-28) so eingerichtet ist, daß er Nachrichten von der Einrichtung (2, 30) zur Beurteilung empfängt und diese in Daten des Formats des wenigstens einen Übertragungsnetzes umwandelt.

3. Telekommunikationssystem nach Anspruch 1 oder 2,
**dadurch gekennzeichnet,**
daß die Daten Nutzdaten und Zusatzdaten enthalten, wobei die Qualität des Taktes durch die Zusatzdaten beschrieben wird.

4. Telekommunikationssystem nach einem der Ansprüche 1 bis 3,
**dadurch gekennzeichnet,**
daß die Vielzahl verschiedener Übertragungsnetze wenigstens ein PDH-Übertragungsnetz umfaßt.

5. Telekommunikationssystem nach einem der Ansprüche 1 bis 4,
**dadurch gekennzeichnet,**
daß die Vielzahl verschiedener Übertragungsnetze wenigstens ein SDH-Übertragungsnetz umfaßt.

6. Telekommunikationssystem nach einem der Ansprüche 1 bis 5,
**dadurch gekennzeichnet,**
daß die Vielzahl verschiedener Übertragungsnetze wenigstens ein SONET-Übertragungsnetz umfaßt.

7. Telekommunikationssystem nach einem der Ansprüche 1 bis 6,
**dadurch gekennzeichnet,**
daß die Nachrichten zur Beschreibung der Qualität Zahlenwerte in einem Wertebereich enthalten.

8. Telekommunikationssystem nach Anspruch 7,
**dadurch gekennzeichnet,**
daß der Wertebereich wenigstens den Umfang des größten Wertebereiches der übertragenen Daten aufweist.

9. Telekommunikationssystem nach Anspruch 7,
**dadurch gekennzeichnet,**
daß der Wertebereich 4 Bits eines Bytes umfaßt.

10. Verfahren zum Synchronisieren eines Telekommunikationssystems, das mit wenigstens einem einer Vielzahl verschiedener Übertragungsnetze verbunden ist, wobei dem Telekommunikationssystem aus dem wenigstens einen Übertragungsnetz wenigstens ein Takt als Synchronisa-tionsquelle zugeführt wird, wobei das Verfahren die Schritte aufweist:
Empfangen von Daten, die die Qualität des zugeführten Taktes beschreiben, aus dem wenigstens einen Übertragungsnetz in einem in dem wenigstens einen Übertragungsnetz verwendeten Format,
Umwandeln der Daten in Nachrichten eines Formates, das vom Format der empfangenen Daten unabhängig ist,
Beurteilen der Qualität des zugeführten Taktes durch Auswerten der Nachrichten,
Entscheiden, ob das Telekommunikationssystem mit dem zugeführten Takt synchronisiert werden soll, und
Synchronisieren des Telekommunikationssystems mit dem zugeführten Takt, falls das Telekommunikationssystems mit dem zugeführten Takt synchronisiert werden soll.

11. Verfahren nach Anspruch 11, wobei der Schritt des Empfangens von Daten die Schritte des Empfangens von Nutzdaten und des Empfangens von Zusatzdaten umfaßt, wobei die die Qualität des Taktes beschreibenden Daten Zusatzdaten sind.

12. Verfahren nach Anspruch 10 oder 11, wobei die Daten Daten eines PDH-Übertragungsnetzes sind.

13. Verfahren nach einem der Ansprüche 10 bis 12, wobei die Daten Daten eines SDH-Übertragungsnetzes sind.

14. Verfahren nach einem der Ansprüche 10 bis 13, wobei die Daten Daten eines SONET-Übertragungsnetzes sind.

15. Verfahren nach einem der Ansprüche 10 bis 14, wobei der Schritt des Umwandelns der Daten in Nachrichten einen Schritt des Umrechnens des Wertes der Qualität des zugeführten Taktes in einen Wert eines unabhängigen Wertebereiches umfaßt.

16. Verfahren nach Anspruch 15, wobei der Schritt des Umrechnens ohne Verlust umkehrbar ist.

17. Verfahren nach Anspruch 15, wobei der Schritt des Umrechnens das Setzen von vier Bits eines Bytes umfaßt.

18. Verfahren nach einem der Ansprüche 10 bis 17, wobei der Schritt des Entscheidens das Auswählen des zugeführten Taktes der höchsten Qualität umfaßt.

19. Verfahren nach einem der Ansprüche 10 bis 17, wobei der Schritt des Entscheidens das Auswählen eines zugeführten Taktes umfaßt, dessen Qualität oberhalb eines Schwellwertes liegt.

20. Verfahren zum Senden von Daten von einem Telekommunikationssystem in wenigstens eines einer Vielzahl verschiedener Übertragungsnetze, wobei die Daten die Qualität eines Taktes beschreiben, zu dem das Telekommunikationssystem synchronisiert ist, wobei das Verfahren die folgenden Schritte aufweist:
Erzeugen einer die Qualität beschreibenden Nachricht in einem Format, das von Formaten der zu sendenden Daten unabhängig ist,
Umwandeln der Nachrichten in Daten eines in dem wenigstens einen Übertragungsnetz verwendeten Formates, und
Übertragen der Daten in das wenigstens eine Übertragungsnetz.

21. Verfahren nach Anspruch 20, wobei der Schritt des Empfangens von Daten die Schritte des Empfangens von Nutzdaten und des Empfangens von Zusatzdaten umfaßt, wobei die die Qualität des Taktes beschreibenden Daten Zusatzdaten sind.

22. Verfahren nach Anspruch 20 bis 21, wobei die Daten Daten eines PDH-Übertragungsnetzes sind.

23. Verfahren nach Anspruch 20 bis 22, wobei die Daten Daten eines SDH-Übertragungsnetzes sind.

24. Verfahren nach Anspruch 20 bis 23, wobei die Daten Daten eines SONET-Übertragungsnetzes sind.

25. Verfahren nach einem der Ansprüche 20 bis 24, wobei der Schritt des Umwandelns der Daten in Nachrichten einen Schritt des Umrechnens des Wertes der Qualität des zugeführten Taktes in einen Wert eines unabhängigen Wertebereiches umfaßt.

26. Verfahren nach Anspruch 25, wobei der Schritt des Umrechnens ohne Verlust umkehrbar ist.

27. Verfahren nach Anspruch 25 oder 26, wobei der Schritt des Berechnens das Setzen von vier Bits eines Bytes umfaßt.
